# EUROPEAN PATENT SPECIFICATION

(11) **EP 4 127 511 B1**
(45) Date of publication and mention of the grant of the patent: **20.08.2025**
(21) Application number: 21776891.0
(22) Date of filing: 25.03.2021
(51) Int. Cl.: F16G 15/06

(54) **SCHACKLE LOCK AND SHACKLE COMPRISING SAID SHACKLE LOCK**
BÜGELSCHLOSS UND BÜGEL MIT BESAGTEM BÜGELSCHLOSS
VERROU DE MANILLE D'ASSEMBLAGE ET MANILLE D'ASSEMBLAGE COMPRENANT LEDIT VERROU

(30) Priority: 25.03.2020 NO 20200353
(43) Date of publication of application: 08.02.2023
(73) Proprietor: Hylestad Solutions AS, 4748 Rysstad (NO)
(72) Inventor: BJØRGUM, Kjetil, 4615 Kristiansand (NO)
(74) Representative: Håmsø Patentbyrå AS
(86) International application number: PCT/NO2021/050080
(87) International publication number: WO 2021/194354

(56) References cited:
- EP-A1- 3 163 120
- EP-B1- 1 766 166
- WO-A1-2009/149503
- WO-A1-2016/153196
- WO-A1-2018/220512
- WO-A1-2019/236675
- WO-A1-89/00249
- FR-A- 1 118 908
- US-A- 1 419 974
- US-A- 4 068 960
- US-A- 4 102 124
- US-A- 5 046 881
- US-A1- 2005 276 658
- US-A1- 2006 099 838
- US-A1- 2013 074 469
- US-A1- 2018 274 630

## Description

The invention relates to a lock for a shackle pin, more specifically a shackle lock arranged to be positioned on the outside of a shackle body. The invention also relates to a shackle comprising said shackle lock and a locking device comprising the shackle pin and the shackle lock.

### The prior art and drawbacks thereof

A shackle is typically used for joining chains or for attaching blocks, hooks, rigs and the like to a chain, rope or wire. Shackles are found in many sizes and are intended for loads from a few kilos to several hundred tonnes.

A conventional shackle comprises a U-shaped shackle body and a shackle pin. The shackle body comprises a first end and an opposite second end, the first end and the second end being provided with corresponding cut-outs for the shackle pin.

The shackle pin comprises a first end and a second end, the first end being arranged to be passed through the corresponding cut-outs, and the second end being arranged to abut supportingly against an outside of the first end or the second end of the shackle body so that the shackle pin is locked in a first axial direction.

To lock the shackle pin in a second axial direction, it is known to fit a locking pin and/or a nut at the first end of the shackle pin. The patent document KR20120131882A discloses an example of such a solution. It is also known to provide the shackle pin with two externally threaded portions arranged to engage with two corresponding threaded portions at the first and second ends of the shackle body.

The patent document GB133610 discloses a shackle pin provided with an axial and helical groove arranged to engage with a corresponding guiding peg in one of the cut-outs of the shackle body. The shackle pin is locked by the peg and the groove rotating the shackle pin through 360 degrees during the last part of the insertion.

Patent document US2005/0276658A1 discloses a spring loaded quick release pin and tubular receiver with a retainer pin configured to secure the quick release pin in a shackle, clevis, yoke or forked rod end. The receiver is welded to a shackle or cast with the shackle as a single body. One end of the quick release pin has aligned J slots that engage the retainer pin positioned in the receiver with a clockwise twist. The other end of the quick release pin has a cap and a spring loaded sleeve that biases the cross pin against outside of the second leg of the shackle. The spring bias keeps the short leg of the J slot engaged with the retaining pin. The quick release pin is removed with a push and counter clockwise twist. There is provided a kit with a receiver, a bushing and a quick release pin for installing or retrofitting existing shackles.

Patent document US2018/0274630A1 discloses a latching arrangement, in particular for a component from lifting, lashing or fastening technology. The latching arrangement has a first component provided at its one end with at least one laterally protruding, spring-tensioned latching projection, and a second component provided with a receptacle configured to receive in an insertion direction and to fasten rotatably the end of the first component. The second component comprises a latching recess for the latching projection, wherein the latching recess is bounded at least at one side by a release shoulder displaceable into the latching recess which is provided with a hand switch arranged so as to be accessible from outside the latching arrangement, which hand switch is connected in a movement-transmitting manner to the release shoulder and closes the receptacle. By simple actuation of the hand switch, the latching can be repeatedly and easily released.

Patent document US2006/0099838A1 discloses a releasably engageable locking pin for coupling members such as shackles. The locking pin comprises a shaft of noncircular cross-section with a head at one end. The noncircular shaft is engageable in aligned complementary apertures in shackle devises to prevent rotation of the pin in the apertures. At the end of the pin opposite the head is a bayonet-type coupling formation to releasably engage a retaining member under the influence of a resilient bias caused by axial compression of a resiliently deformable member when in a locked position.

Patent document US1419974A discloses a shackle comprising a pin rotatably mounted and moveable vertically in eyes formed in the outer ends of a substantially U-shaped member, a coiled spring arranged between the head of the pin and one of the ends of the member a projection on the pin, slots in the said eyes adapted to receive the projection, a sleeve moveably mounted on the pin and slidable in a handle formed on the head of the pin, the coiled spring being arranged within said handle, for the purposes described.

Patent document FR1118908A discloses a quick and safe locking system and it is applicable whenever a pin needs to be locked longitudinally in a bore which is the case with tackle and mainly shackles. To this end, the locking system is made up of one or more metal parts which are housed in a groove made on the shaft, while a second groove, placed after the first, increases the safety of the system in such a way that, to insert the pin and lock it, only one translational movement is required, obtained by passing over its end, while unlocking takes place in at least two movements, one rotation, the other translation, thus making impossible any risk of accidental unlocking.

Patent document WO2009/149503A1 discloses a locking pin system comprising a pin in the form of a shaft, and retaining assemblies at opposite ends of the shaft. The ends of the shaft are captively held in locating apertures of a lug of a shackle. The lug has aligned opposite recesses in which the retaining assemblies are fixed. The retaining assemblies each include a barrier locatable adjacent the respective locating aperture of the lug to close off the locating aperture, thereby preventing the shaft from being ejected through the locating aperture. The barrier includes a lock formation operable to engage a locating formation associated with the shackle to releasably lock the barrier in position.

Patent document US4,102,124 discloses a pin or bolt slidingly supportable in rings at opposite ends, or throughout its body in a sleeve, such as through the eyes of a clevis, is usefully locked against axial displacement by a radially sliding spring-biased detent which fits into a groove of a supporting ring or sleeve, securing it against axial displacement. The supporting ring has a slot extending inward from a support surface and sized to receive a key, such as a disc or a coin, which may be inserted in the slot to engage and depress the detent against its biasing spring, sufficient to displace it from the groove of the ring and thus unlocking and allowing the pin to be displaced in its support by sliding therefrom axially. In a modified form, where the supporting rings of a clevis are dimensioned so small that the radially cut slot would tend to weaken them, the ends of the pin may be secured by extra annular rings or washers mounted adjacent to the main supporting rings of the clevis. In the modified form the extra locking rings are sized to receive the internal groove for retaining the tip of the spring biased detent, as well as the slot cut radially into the additional ring, through which the key-like coin is inserted for radial displacement of the detent and thus releasing a locked pin for axial movement. In a second modification the key may be a small plate resiliently supported in a slot between resilient pads in a keyway groove cut in a clevis ring from which the outer end of the key extends, allowing a finger to be inserted to press against the key plate, pressing it against the tip of the detent for unlocking the pin for axial movement.

Patent document US2013/0074469A1 discloses locking devices as well as methods of their manufacture and use. One locking device includes first and second legs operatively coupled together to form a perimeter substantially uninterrupted from a proximal end of the first leg to a proximal end of the second leg. The proximal ends are separated by an opening, and each proximal end respectively defines a passage. A keyway extends from the first leg passage, and first and second shoulders are adjacent the keyway. A receiving area extends from the second leg passage. A locking pin passes through the second leg passage and is movable between an open position, a closed position, and an intermediate position. The locking pin has a key and a stop that prevent the locking pin from passing entirely through the second leg passage. A biasing member biases the locking pin in various ways.

Patent document EP3163120A discloses a shackle with captured pin assembly. The shackle includes a pair of opposed legs. A first ear for one of the opposed legs includes an opening therethrough to receive a shackle pin. A recess in the opening receives a spring clip surrounding a shaft of the shackle pin. A second ear for another of the opposed legs is opposed to the first ear. The second ear has an opening therethrough to receive the shackle pin and has an opening with a threaded portion. The shackle pin has a head, a threaded portion engageable with the threaded portion of the second ear opening, and a reduced diameter portion. The rotating retaining clip rotates about an axis parallel to the shackle pin between a locked and an unlocked position.

Patent document US4,068,960 discloses a safety lock for a removable shaft which has special utility when disposed on a clevis or like device. The lockable shaft is disposed by means which readily permit free lateral movement while preventing accidental disengagement under load bearing conditions when in the locked position. In an embodiment, shaft removal from a cooperating support member is prevented by a shaft restrictive means. Thus, complete removal of the shaft from support members during load transfer is avoided.

Patent document US5,046,881 discloses a locking pin and clevis wherein a slidable lockable member engages one end of the pin to lock it and a spring can be locked to said slide member to prevent it from moving to the unlocked position. The spring can be disengaged with the slide member to allow the slide member to be moved to the unlocked position so that the pin can be moved out of engagement with the one end of the clevis.

Patent document WO2016/153196A1 discloses a shackle for preventing a screw-bolt from being loosened by reverse rotation. More specifically, a shackle for preventing a screw-bolt from being loosened by reverse rotation that can prevent a heavy object from falling on account of the separation of the screw-bolt from a shackle main body by reverse rotation, which is caused by continuous vibration or external impact when a hoist lifts the heavy object, by installing and using a rotation control device that prevents the reverse rotation of the screw-bolt. The shackle for preventing a screw-bolt from being loosened by reverse rotation comprises: a shackle main body having insertion holes formed in opposite sides thereof; a screw-bolt inserted into the insertion holes that are formed in the shackle main body; and a rotation control device that is fixedly coupled to the outside of the shackle main body and selectively restricts the rotational direction in which the screw-bolt is rotated by an external force.

Patent document WO2018/220512A1 discloses a safety clasp for securely engaging a mechanical fastener, the safety clasp including a body, at least two primary engagement formations/members, and a tether-engaging component. The body defines a seat for receiving a mechanical fastener, the mechanical fastener is securable to a complementary fastening member. The primary engagement formations/members extend from the seat, for engaging the mechanical fastener. The tether-engaging component is rotatable relative to the body, for tethering the safety clasp to an anchor point external to, and separate from, the mechanical fastener.

Patent document WO2019/236675A1 discloses a pinned connection assembly including a first rigging component, a second rigging component, a rigging pin, a locking pin, and a lock. The first rigging component has an end with at least one coupling aperture and at least one retention aperture that is transverse to the coupling aperture. The second rigging component has an end with at least one coupling aperture. The rigging pin has an end with a retention groove. The rigging pin is inserted through the coupling apertures of the first and second rigging components. The locking pin has an end with a locking groove. The locking pin is inserted through the retention aperture and the retention groove. The locking groove has guide, transitional, and locking portions for engaging a key of the lock.

In a conventional shackle, the shackle pin is releasable from the shackle body. Therefore, the shackle pin must be secured to the shackle body with a safety chain.

In major lifting operations, the shackle must often be connected above the body that is to be lifted, and there is often a person in the immediate vicinity of the coupling. An operation like that typically involves the shackle body hanging on a first rope, whereafter the operator must lift up and position a second rope in the shackle body, and at the same time fit the shackle pin into the shackle body. This operation is considered as critical in many cases and a more user-friendly and safer shackle is therefore sought.

The invention has for its object to remedy or reduce at least one of the drawbacks of the prior art or at least provide a useful alternative to the prior art.

The object is achieved through the features that are specified in the description below and in the claims that follow.

### General description of the invention

The invention is defined by the independent claims. The dependent claims define advantageous embodiments of the invention.

In a first aspect, the invention relates more specifically to a shackle lock for positioning on a shackle body, the shackle lock comprising a housing, at least one locking body and a displaceable sleeve which is displaceable in an axial direction of the housing. The housing is arranged to be connected to the shackle body and is arranged to house a first end of a shackle pin. The at least one locking body is arranged to engage with a peripheral locking groove at the first end of the shackle pin. The sleeve, in a locking position, is arranged to keep the at least one locking body in the groove, and is arranged, in a releasing position, to disengage the at least one locking body from the groove.

In an advantageous embodiment, the first end of the shackle pin which is described herein may have a circular cross section which corresponds to an internal circular cut-out in the housing. By a peripheral groove is understood, herein, a radial groove encircling the shackle pin.

The sleeve surrounds a portion of the housing. When the sleeve is in the first locking position, the at least one locking body is in an engaged position in the groove of the shackle pin when the shackle pin is positioned in the housing. The at least one locking body may be in the engaged position even when the shackle pin is not positioned in the housing.

To be able to move the shackle pin into the housing or out of the shackle lock, the at least one locking body must be released from the engaged position. The at least one locking body may be released from the engaged position by pulling the sleeve backwards in the axial direction of the housing, away from the shackle body.

In a first embodiment, the sleeve may be freely displaceable in a first axial direction and an opposite second axial direction. This gives a simple design of the shackle lock, in which the sleeve is slid manually between the locking position and the releasing position.

To prevent the freely displaceable sleeve from sliding unintendedly, the sleeve and the housing may comprise a device for keeping the sleeve in the locking position and/or the releasing position. Such a safety device may, for example, be an L-shaped, J-shaped or U-shaped guiding groove in the housing or sleeve, said guiding groove engaging with a corresponding guiding peg in the other one of the housing and sleeve. Thereby the sleeve must first be rotated before it can be displaced.

The shackle lock may be self-locking.

The effect of the shackle lock being self-locking is that the at least one locking body engages automatically with the groove, and that the sleeve is then moved automatically into the locking position when the shackle pin is positioned in the shackle lock. This simplifies the locking of the shackle pin and increases safety because the operator does not have to carry out an active action to position the at least one locking body in the engaged position. Such a locking of the shackle pin is referred to as a passive locking.

Unlike a passive locking, an active locking will typically include the use of separate locking elements such as a nut or a split-pin, or the use of a tool.

The shackle lock may be arranged to release the at least one locking body automatically when the shackle pin is being inserted into the shackle lock, in that the first end of the shackle pin comprises a cone arranged to force the at least one locking body outwards and thereby the sleeve backwards. When the cone has passed the at least one locking body, the at least one locking body will go into an engaged position so that the shackle pin cannot be pulled out. This principle is known to be used in hydraulic quick-release couplings, among other things.

The shackle lock may comprise a spring arranged to keep the sleeve in the locking position.

The effect of the spring is that the sleeve is biased into the locking position so that the at least one locking body is kept in the engaged position as long as the sleeve is not subjected to a force of opposite direction greater than the spring force, for example by the sleeve being pulled back by means of hand power.

When the shackle pin is to be released from the shackle lock, the sleeve is pulled away from the shackle body so that the at least one locking body is released and can be forced radially outwards when the shackle pin is pulled out of the shackle lock.

The sleeve may be kept in the locking position by means of a push force provided by a pressurized fluid. The fluid may be oil. The fluid may alternatively be a gas, typically air.

A hydraulic or pneumatic spring force may be relevant in larger locks, in which the dimensions of the shackle lock and the sleeve are so large that it may be difficult or impractical to operate the sleeve manually. The fluid pressure may, for example, be provided by means of a prior-art actuator. The actuator may be linear. The actuator may be a rotating one.

The at least one locking body may be a ball.

The effect of the at least one locking body being a ball is that the shackle lock may include a plurality of locking bodies which are radially movable between a releasing, outer position and an inner locking position. The solution with several balls as described herein is known to have been used in, for example, hydraulic quick-release couplings and is a proven and safe solution.

In an alternative embodiment, the at least one locking body may be an annular spring with an open portion, the annular spring being expandable from a smallest diameter to a largest diameter.

In a further alternative embodiment, the at least one locking body may be a bail adapted for radial displacement between a locking position and a releasing position. The bail may be spring-loaded into the locking position.

The shackle lock may comprise a threaded portion arranged to engage with a corresponding threaded portion of a shackle body.

The effect of a threaded connection as is described herein is that the shackle lock may be formed as a separate component for retrofitting to a shackle body with a corresponding threaded portion. Another advantage of a threaded connection is that the shackle lock may be replaced on possible wear or damage.

An advantageous threaded connection may comprise an externally threaded portion on the housing and a corresponding internally threaded portion in the shackle body. By the threaded portion of the shackle body being an internal one, the threaded portion of the shackle body may be formed without having to add a projecting portion to the shackle body.

In an alternative embodiment, the shackle lock may be adapted for permanent attachment to the shackle body. By permanent attachment may be understood, herein, that a portion of the shackle lock is attached to the shackle body by, for example, heat treatment or a press fit, and that said locking portion cannot be separated from the shackle body without the use of heat or a cutting tool.

In a further alternative embodiment, the housing of the shackle lock may be formed of a projecting portion belonging to the shackle body. The projecting portion may be formed as part of a moulding process for the shackle body.

The effect of the shackle lock being permanently attached to the shackle body is that a joining of the housing and shackle body which is stronger than a threaded connection may be provided. Further, machining of the inside of the housing may happen at the same time as holes for the shackle pin are machined in the shackle body.

In a second aspect, the invention relates more specifically to a shackle comprising a shackle body and shackle pin, and a shackle lock in accordance with the first aspect of the invention. The shackle lock is arranged on an outside of the first end of the shackle body, the shackle lock being arranged axially coincidingly with the cut-outs of the shackle body, and the shackle lock projecting from the first end of the shackle body in a direction away from the second end of the shackle body. The shackle pin is provided with a peripheral locking groove at a first end of the shackle pin, the peripheral locking groove being arranged to engage with at least one locking body belonging to the shackle lock.

By an outside may be understood, herein, a face comprising a cut-out for a shackle pin. The shackle lock is positioned on an outside of the first end.

The effect of a shackle comprising a shackle lock as is described herein is that a simpler and safer use of shackles than that of the prior art may be provided.

The shackle lock may be releasably attached to the shackle body. The shackle lock may be permanently attached to the shackle body.

By releasably attached may be understood, herein, that the shackle lock may be fitted to the shackle body and removed from the shackle body, for example via a threaded connection. The threaded connection may comprise an externally threaded portion on the shackle lock and an internally threaded portion in the shackle body. The externally threaded portion of the shackle lock may be formed in a housing belonging to the shackle lock.

The shackle may comprise a shackle pin with a peripheral locking groove at the first end of the shackle pin, the peripheral locking groove being arranged to engage with at least one locking body belonging to the shackle lock.

The effect of the peripheral locking groove is that the shackle pin can be locked in an axial direction without the use of separate locking means such as a locking pin or a nut.

The peripheral locking groove of the shackle pin may have a width arranged to give the locking body moving space in the axial direction of the shackle pin.

By width may be understood, herein, a recess in a radial direction of the shackle pin. Said moving space is achieved when the width of the groove is larger than the width of the locking body measured in the axial direction of the shackle pin.

An effect of the peripheral locking groove having a width arranged to give the locking body moving space in the axial direction of the shackle pin is that the shackle pin can be moved in a limited axial direction. In technical language, this movement is referred to as slack. Slack may be advantageous because it may help to transmit loads from the at least one locking body and groove to an abutment surface between the shackle pin and the shackle body.

By the shackle pin including the locking groove, a lockable shackle pin without any movable parts may be provided, as the movable parts for locking the shackle pin to the shackle are arranged in the housing. Thereby a shackle with a lockable shackle pin may be provided in which movable parts belonging to the lock, for example balls and springs, may be positioned in a protected manner inside the housing.

The shackle pin may include a recess with a first end arranged to engage with a corresponding stop at the second end of the shackle body, a shackle lock being arranged at the first end of the shackle body. The recess may be plane.

The effect of the recess is that the shackle pin cannot unintendedly be pulled out of the shackle body, and that it is only possible to pull the shackle pin out of the shackle lock when the flat of the recess is parallel to the stop. This gives an additional safety device for the shackle pin.

When the shackle is being used, a connected strap or a rope should rest against the curved surface of the shackle pin and as little as possible in the transition between the recess and the curved surface. Said transition is preferably rounded but may cause an undesired point load on straps and ropes. Therefore, in use, it is natural to orient the shackle pin in such a way that the flat of the recess faces in the direction of force of the strap or rope. In normal use, this direction will be perpendicular to the stop, so that the flat of the recess will not be parallel to the stop.

When fitting and removing the shackle pin, the stop may be removed.

In a second end, the shackle pin may comprise a radial recess adapted for rotatable engagement with the stop.

The effect of the radial recess is that the shackle pin may rotate around its centre axis when the peripheral locking groove of the shackle pin is in a locking engagement with the shackle lock. Further, when in engagement with the radial groove, the stop will give an extra axial locking of the shackle pin.

In a further aspect, the invention relates to a locking device for a shackle, the locking device comprising a shackle pin and a shackle lock in accordance with the first aspect of the invention, and at least one of a first safety function and a second safety function for the shackle pin:
- the first safety function comprising the stop positioned in the shackle body and against the recess of the shackle pin, and the first end belonging to the recess being arranged to engage with the stop so that the shackle pin is prevented from being pulled out of the shackle body;
   and
- the second safety function comprising the stop and the radial recess in the shackle pin, the stop being arranged to prevent axial movement of the shackle pin when the shackle pin is positioned in such a way that the recess does not correspond with the stop.

In what follows, examples of preferred embodiments are described, which are visualized in the accompanying drawings, in which:
- Figure 1: shows, in perspective, a shackle comprising a shackle lock arranged on a shackle body, and a shackle pin in a locking position;
- Figure 2: shows the shackle of figure 1 in a releasing position and from a different angle;
- Figure 3: shows the shackle on a larger scale, seen from the front;
- Figure 4: shows the shackle from the side;
- Figure 5: shows a vertical section A-A of the shackle in which the shackle lock is screwed to the shackle body;
- Figure 6: shows a horizontal section B-B of the shackle of figure 5, the shackle pin being in the releasing position;
- Figure 7: shows a vertical section A-A of the shackle in which the shackle lock has been press-fitted to the shackle body;
- Figure 8: shows a housing and a sleeve with a guiding groove;
- Figure 9: shows a vertical section A-A of the shackle in which a housing belonging to the shackle lock is part of the shackle body;
- Figure 10: shows a first embodiment of the shackle pin;
- Figure 11: shows a section C-C of the shackle pin of figure 10; and
- Figure 12: shows an alternative embodiment of the shackle pin according to figure 10.

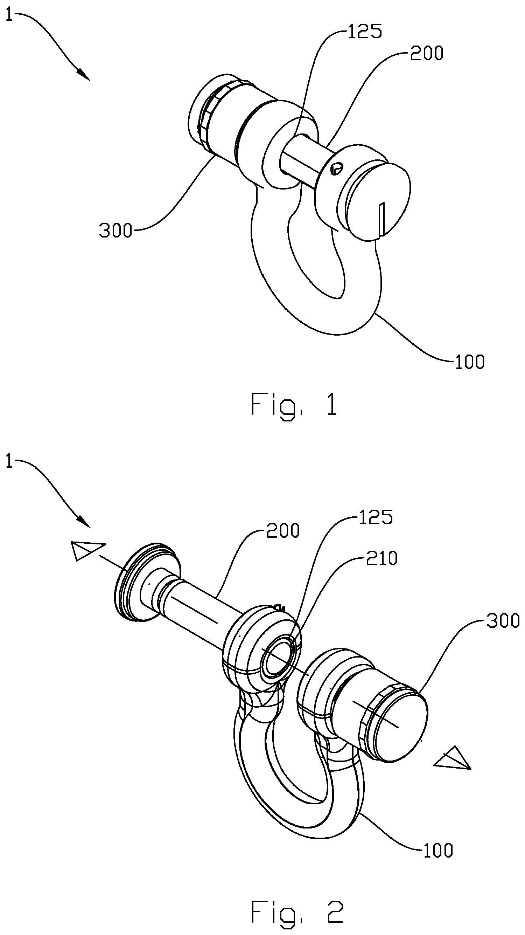

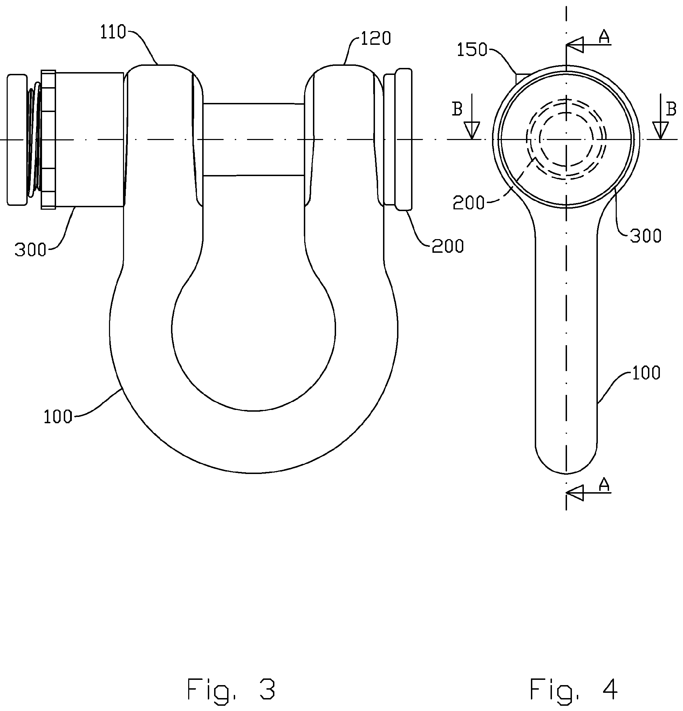

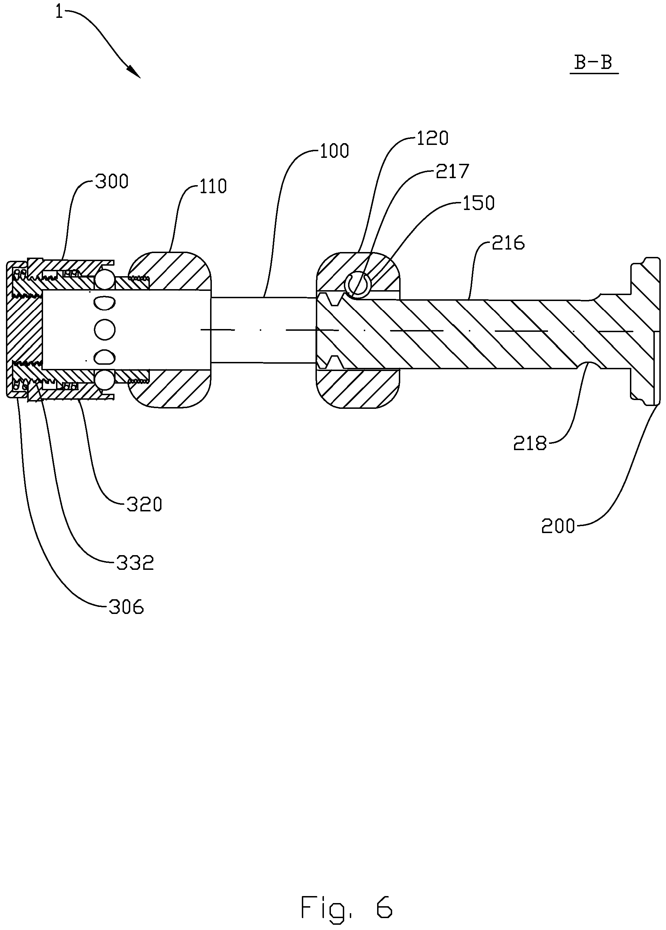

Reference is made first to figures 1-6: A shackle lock 300 is positioned on the outside of a shackle body 100, the shackle lock 300 comprising a housing 305, at least one locking body 310 and a displaceable sleeve 320, the housing 305 being arranged to house a first end 210 of a shackle pin 200. The at least one locking body 310 is arranged to engage with a peripheral locking groove 230 at the first end 210 of the shackle pin 200. The sleeve 320, in a locking position (figures 1, 3 and 5), is arranged to keep the at least one locking body 310 in the groove 230, and is arranged, in a releasing position (figures 2 and 6), to release the at least one locking body 310 from the groove 230. The shackle body 100, shackle pin 200 and shackle lock 300 constitute a shackle 1.

The shackle body 100 comprises a first end 110 and a second end 120 with axially coinciding cut-outs 125 adapted for the insertion of the shackle pin 200. In a first embodiment, the shackle lock 300 is attached to the first end 110 via a threaded connection. The housing 305 comprises an outer threaded portion 330 arranged to engage with an internally threaded portion 130 at the first end 110 of the shackle body 100.

In this embodiment, the shackle lock 300 comprises a housing 305, an end cap 306, a sleeve 320, a first spring 325, a second spring 326 and a plurality of locking bodies 310, shown in the figures as balls.

The shackle pin 200 comprises a first end 210, a coupling portion 215 and a second end 220. The first end 210 and the coupling portion 215 are separated by a peripheral groove 230 arranged to receive at least one locking body 310.

In one embodiment, the second end 120 of the shackle body 100 includes a recess for a stop 150 arranged to prevent the shackle pin 200 from being pulled out of the shackle body 100 by accident. In figure 6, the stop 150 is shown as a tension pin. The stop 150 may be removed when the shackle pin 200 is being installed and removed.

The springs 325 and 326 push the sleeve 320 towards the shackle body 100, so that an abutment surface 321 keeps the balls 310 in a position of engagement with the groove 230 belonging to the shackle pin 200. When the shackle pin 200 is to be released, the sleeve 320 is pulled towards the end cap 306 so that the balls 310 can be disengaged and forced outwards by the shackle pin. The sleeve 320 is shown with a cone 322 arranged to push the balls 310 into the groove 230 when the shackle pin 200 is to be locked.

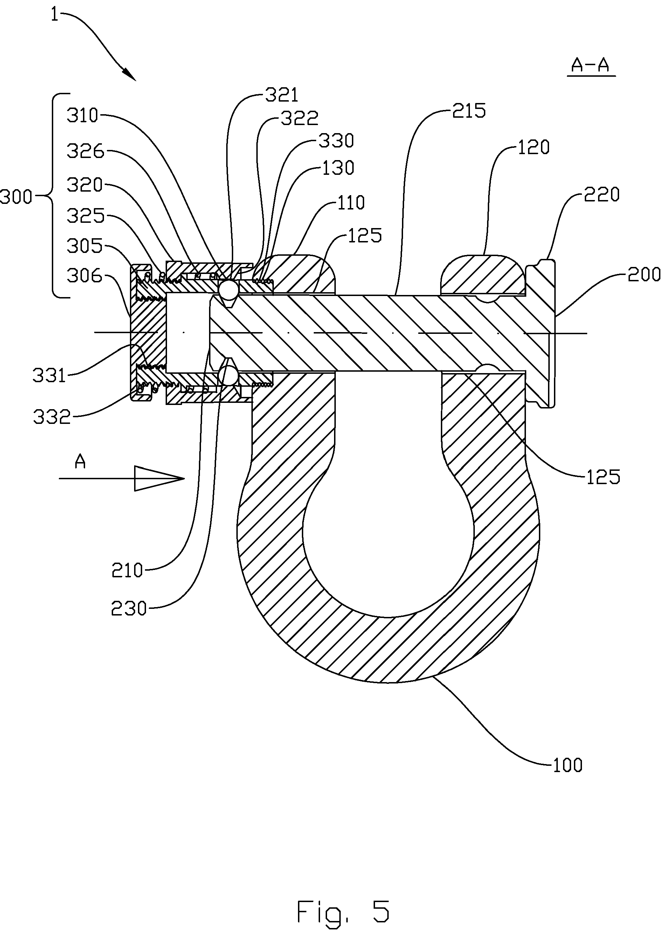

In figures 5 and 6, a second threaded portion 332 between the housing 305 and the sleeve 320 is shown. The second threaded portion 332 is arranged to guide and keep the sleeve 320 in a retracted position as shown in figure 6. It is pointed out that the threaded portion 332 shown in figures 5 and 6 is only illustrative and that real threads may be of a different design from the one shown in the figures.

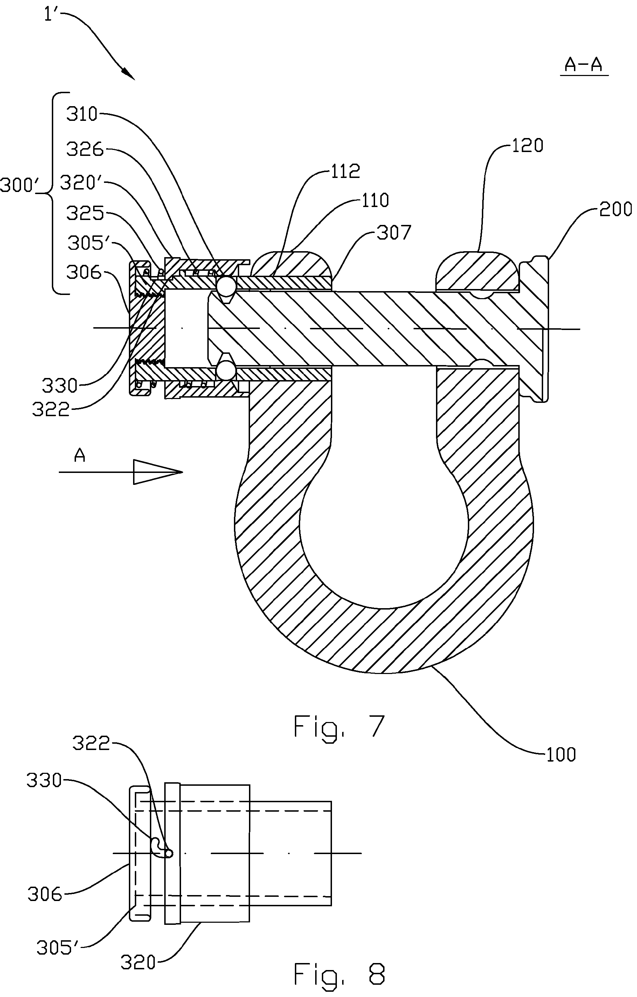

Figures 7 and 8 show an alternative embodiment of the shackle lock 300, in which the housing 305' is attached to the shackle body 100 by a press fit, the housing 305' of the shackle lock 300 having been extended by an engagement portion 307 arranged to engage with a corresponding cut-out 112 in the shackle body 100. Further, the housing 305" is shown with a guiding groove 330 shaped like an L or a J, arranged to engage with a corresponding guiding peg 322 arranged in a radially inward-projecting manner on the sleeve 320 (see figure 8).

Figure 8 shows the housing 305' with the guiding groove 330 and the sleeve 320 with the guiding peg 322. When the sleeve 320 is pulled backwards and towards the end cap 306, the guiding groove 330 and the guiding peg 322 will guide the sleeve first in an axial direction and then in a circumferential direction. When the guiding peg 322 has been moved to the end of the guiding groove 330, the sleeve 320 will be kept in a releasing position so that the shackle pin 200 can be moved freely in and out of the shackle lock 300'.

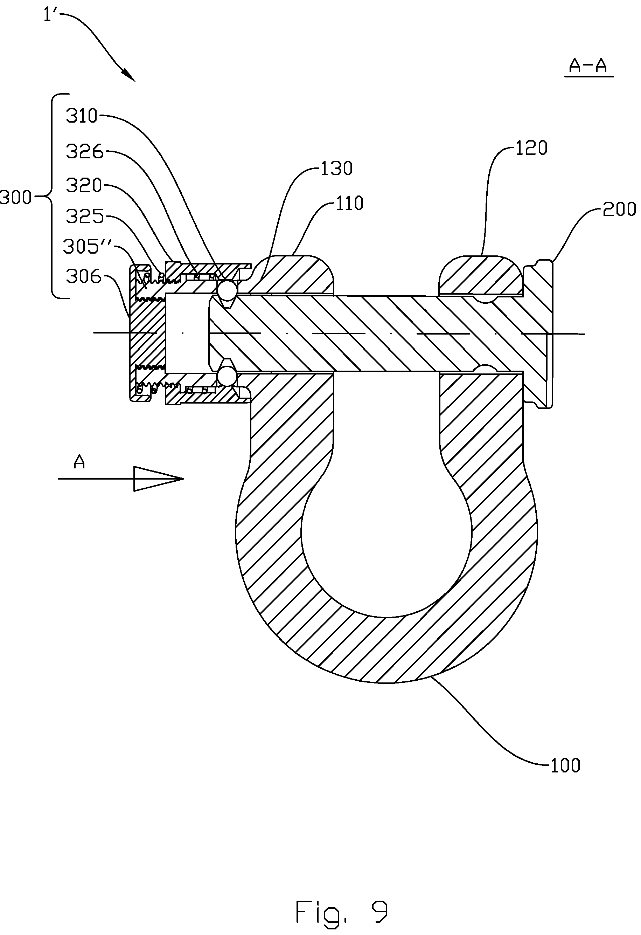

Figure 9 shows a third embodiment of the shackle lock 300, in which the housing 305" is part of the shackle body 100. Other components belonging to the shackle lock 300 are the same as those shown in the other figures.

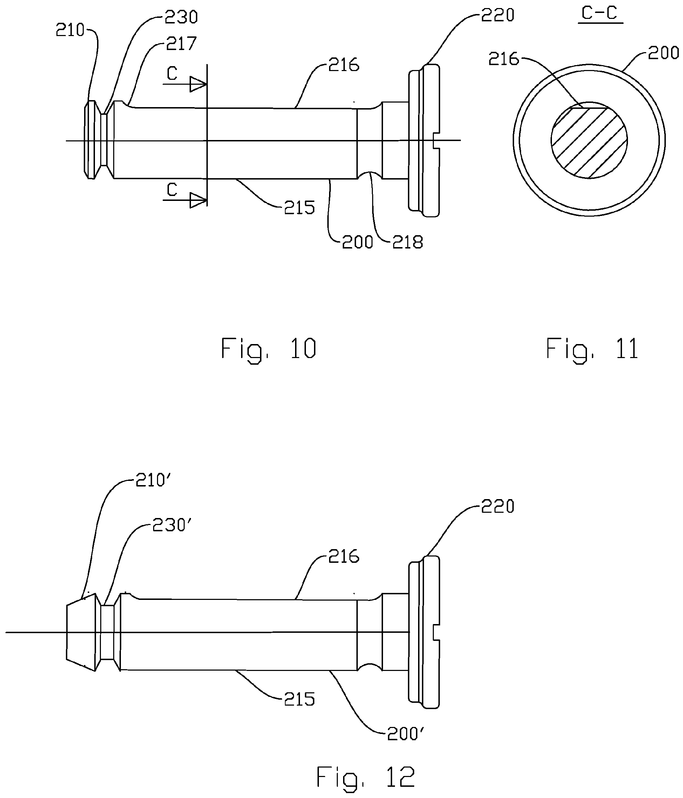

Figures 10 and 11 show the shackle pin 200 with a plane recess 216 with a first end 217 arranged to engage with the stop 150 shown in figure 6. The shackle pin 200 is further shown with a radial recess 218 adapted for rotatable engagement with the stop 150. The radial recess 218 makes it possible for the shackle pin 200 to rotate around its own axis. The radial recess 218 also functions as an additional safety device as the stop 150 will prevent axial movement of the shackle pin 200, except when the shackle pin 200 is positioned in such a way that the plane recess 216 corresponds with the stop 150 as shown in figure 6. For the shackle pin 200 to be releasable from the shackle lock 300, the shackle pin 200 must have a radial position like the one shown in figure 6. A person skilled in the art will understand that the recess 216 and the corresponding stop 150 are an advantageous embodiment, and not obligatory for the invention.

Figure 12 shows an alternative embodiment of the shackle pin 200', in which the peripheral locking groove 230' is elongated in the axial direction of the shackle pin 200, and the first end portion 210' has a larger cone. The elongated locking groove 230' and the coned end 210' enable the shackle pin 200' to engage self-lockingly with the shackle lock 300.

The invention described herein can provide a locking device comprising the shackle pin 200 and the shackle lock 300, and at least one safety function for the shackle pin 200.

The at least one safety function may be a first safety function or a second safety function.

The first safety function may comprise the stop 150 positioned in the shackle body 100 and against the recess 216 of the shackle pin 200, the first end 217 belonging to the recess 216 being arranged to engage with the stop 150 so that the shackle pin 200 is prevented from being pulled out of the shackle body 100.

The second safety function may comprise the stop 150 and the radial recess 218 of the shackle pin 200, the stop 150 being arranged to prevent axial movement of the shackle pin 200 when the shackle pin 200 is positioned in such a way that the recess 216 does not correspond with the stop 150.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive. Embodiments and reference numbers marked with ' and " refers to elements with a similar function, but with different designs.

## Claims

1. A shackle lock (300) for positioning on a shackle body (100), wherein the shackle lock (300) comprises a housing (305, 305', 305"), at least one locking body (310) and a sleeve (320, 320') which is displaceable in an axial direction of the housing (305, 305', 305"), wherein:
- the housing (305, 305', 305") is adapted for connection to the shackle body (100) and is arranged to house a first end (210, 210') of a shackle pin (200);
- the at least one locking body (310) is arranged to engage with a locking groove (230, 230') at the first end (210, 210') of the shackle pin (200); and **characterized in that**
- the sleeve (320, 320'), in a first locking position, is arranged to keep the at least one locking body (310) in the groove (230, 230') and, in a releasing position, is arranged to release the at least one locking body (310) from the groove (230, 230').

2. The shackle lock (300) in accordance with claim 1, the shackle lock being self-locking.

3. The shackle lock (300) in accordance with any one of the preceding claims, wherein the shackle lock (300) comprises a spring (325, 326) arranged to keep the sleeve (320, 320') in the locking position.

4. The shackle lock (300) in accordance with any one of the preceding claims, wherein the sleeve (320) is kept in the locking position by means of a push force provided by a pressurized fluid.

5. The shackle lock (300) in accordance with any one of the preceding claims, wherein the at least one locking body (310) is a ball.

6. The shackle lock (300) in accordance with any one of the preceding claims, wherein the shackle lock (300) comprises a threaded portion (330) arranged to engage with a corresponding threaded portion (130) in the shackle body (100).

7. A shackle (1) comprising a shackle body (100) with a first end (110) and a second end (120) with axially coinciding cut-outs (125) adapted for the insertion of a shackle pin (200), wherein:
- a shackle lock (300) in accordance with any one of claims 1-6 is arranged on an outside of the first end (110) of the shackle body (100), the shackle lock (300) being arranged axially coincidingly with the cut-outs (125) of the shackle body (100), and the shackle lock (300) projecting from the first end (110) of the shackle body (100) in a direction away from the second end (120) of the shackle body (100); and
- the shackle pin (200) is provided with a radial locking groove (230) at the first end (210) of the shackle pin (200), the locking groove (230) being arranged to engage with at least one locking body (310) belonging to the shackle lock (300).

8. The shackle (1) in accordance with claim 7, wherein the locking groove (230') of the shackle pin (200) has a width arranged to give the locking body (310) moving space in the axial direction of the shackle pin (200).

9. The shackle (1) in accordance with any one of claims 7-8, wherein the shackle pin (200) includes a plane recess (216) with a first end (217) arranged to engage with a corresponding stop (150) at the second end (120) of the shackle body (100) .

10. The shackle (1) in accordance with any one of claims 7-9, wherein the shackle pin (200), at a second end 220, includes a radial recess (218) arranged to engage with the stop (150) by rotation of the shackle pin (200).

11. A locking device for a shackle (1), wherein the locking device comprises a shackle lock (300) and a shackle pin (200) in accordance with any one of claims 1-6.

12. The locking device in accordance with claim 11, the locking device comprising at least one of a first safety function and a second safety function for the shackle pin (200), wherein:
- the first safety function comprises a stop (150) positioned in the shackle body (100) and against a recess (216) of the shackle pin (200), and a first end (217) belonging to the recess (216) is arranged to engage with the stop (150) so that the shackle pin (200) is prevented from being pulled out of the shackle body (100); and
- the second safety function comprises the stop (150) and the radial recess (218) of the shackle pin (200), the stop (150) being arranged to prevent an axial movement of the shackle pin (200) when the shackle pin (200) is positioned in such a way that the recess (216) does not correspond with the stop (150).

## Patentansprüche

1. Bügelschloss (300) zur Positionierung auf einem Bügelkörper (100),
wobei das Bügelschloss (300) ein Gehäuse (305, 305', 305"), mindestens einen Verriegelungskörper (310) und eine Hülse (320, 320') umfasst, die in einer axialen Richtung des Gehäuses (305, 305', 305") verschiebbar ist, wobei:
- das Gehäuse (305, 305', 305") dazu ausgelegt ist, mit dem Bügelkörper (100) verbunden zu werden, und dazu angeordnet ist, ein erstes Ende (210, 210') eines Bügelbolzens (200) aufzunehmen;
- der mindestens eine Verriegelungskörper (310) dazu angeordnet ist, mit einer Verriegelungsnut (230, 230') am ersten Ende (210, 210') des Bügelbolzens (200) in Eingriff zu kommen; und
**dadurch gekennzeichnet, dass**
- die Hülse (320, 320') in einer ersten Verriegelungsposition so angeordnet ist, dass sie den mindestens einen Verriegelungskörper (310) in der Nut (230, 230') hält, und in einer Freigabeposition so angeordnet ist, dass sie den mindestens einen Verriegelungskörper (310) aus der Nut (230, 230') freigibt.

2. Bügelschloss (300) nach Anspruch 1, wobei das Bügelschloss selbstsichernd ist.

3. Bügelschloss (300) nach einem der vorstehenden Ansprüche, wobei das Bügelschloss (300) eine Feder (325, 326) umfasst, die dazu angeordnet ist, die Hülse (320, 320') in der Verriegelungsposition zu halten.

4. Bügelschloss (300) nach einem der vorstehenden Ansprüche, wobei die Hülse (320) mittels einer Druckkraft in der Verriegelungsposition gehalten wird, die von einem unter Druck stehenden Fluid bereitgestellt wird.

5. Bügelschloss (300) nach einem der vorstehenden Ansprüche, wobei der mindestens eine Verriegelungskörper (310) eine Kugel ist.

6. Bügelschloss (300) nach einem der vorstehenden Ansprüche, wobei das Bügelschloss (300) einen Gewindeabschnitt (330) umfasst, der so angeordnet ist, dass er mit einem entsprechenden Gewindeabschnitt (130) in dem Bügelkörper (100) in Eingriff kommt.

7. Bügel (1), umfassend einen Bügelkörper (100) mit einem ersten Ende (110) und einem zweiten Ende (120) mit axial deckungsgleichen Ausschnitten (125), die zum Einführen eines Bügelbolzens (200) ausgelegt sind,
wobei:
- ein Bügelschloss (300) nach einem der Ansprüche 1-6 an einer Außenseite des ersten Endes (110) des Bügelkörpers (100) angeordnet ist, wobei das Bügelschloss (300) axial deckungsgleich mit den Ausschnitten (125) des Bügelkörpers (100) angeordnet ist, und das Bügelschloss (300) vom ersten Ende (110) des Bügelkörpers (100) in einer Richtung weg vom zweiten Ende (120) des Bügelkörpers (100) vorsteht; und
- der Bügelbolzen (200) an dem ersten Ende (210) des Bügelbolzens (200) mit einer radialen Verriegelungsnut (230) bereitgestellt ist, wobei die Verriegelungsnut (230) dazu angeordnet ist, mit mindestens einem zum Bügelschloss (300) gehörenden Verriegelungskörper (310) in Eingriff zu kommen.

8. Bügel (1) nach Anspruch 7, wobei die Verriegelungsnut (230') des Bügelbolzens (200) eine Breite aufweist, die dazu angeordnet ist, dem Verriegelungskörper (310) Bewegungsraum in axialer Richtung des Bügelbolzens (200) zu geben.

9. Bügel (1) nach einem der Ansprüche 7-8, wobei der Bügelbolzen (200) eine ebene Aussparung (216) mit einem ersten Ende (217) einschließt, die dazu angeordnet ist, mit einem entsprechenden Anschlag (150) am zweiten Ende (120) des Bügelkörpers (100) in Eingriff zu kommen.

10. Bügel (1) nach einem der Ansprüche 7-9, wobei der Bügelbolzen (200) an einem zweiten Ende 220 eine radiale Aussparung (218) einschließt, die dazu angeordnet ist, durch Drehung des Bügelbolzens (200) mit dem Anschlag (150) in Eingriff zu kommen.

11. Verriegelungsvorrichtung für einen Bügel (1), wobei die Verriegelungsvorrichtung ein Bügelschloss (300) und einen Bügelbolzen (200) nach einem der Ansprüche 1-6 umfasst.

12. Verriegelungsvorrichtung nach Anspruch 11, wobei die Verriegelungsvorrichtung mindestens eine von einer ersten Sicherheitsfunktion und einer zweiten Sicherheitsfunktion für den Bügelbolzen (200) umfasst, wobei:
- die erste Sicherheitsfunktion einen Anschlag (150) umfasst, der in dem Bügelkörper (100) und gegen eine Aussparung (216) des Bügelbolzens (200) positioniert ist, und ein erstes Ende (217), das zu der Aussparung (216) gehört, dazu angeordnet ist, mit dem Anschlag (150) in Eingriff zu kommen, so dass der Bügelbolzen (200) daran gehindert wird, aus dem Bügelkörper (100) herausgezogen zu werden; und
- die zweite Sicherheitsfunktion den Anschlag (150) und die radiale Aussparung (218) des Bügelbolzens (200) umfasst, wobei der Anschlag (150) dazu angeordnet ist, eine axiale Bewegung des Bügelbolzens (200) zu verhindern, wenn der Bügelbolzen (200) so positioniert ist, dass die Aussparung (216) nicht mit dem Anschlag (150) übereinstimmt.

## Revendications

1. Verrou de manille (300) destiné à être positionné sur un corps de manille (100), dans lequel le verrou de manille (300) comprend un boîtier (305, 305', 305"), au moins un corps de verrouillage (310) et un manchon (320, 320') qui peut être déplacé dans une direction axiale du boîtier (305, 305', 305"), dans lequel :
- le boîtier (305, 305', 305") est adapté pour une connexion au corps de manille (100) et est agencé pour loger une première extrémité (210, 210') d'une clavette de manille (200) ;
- l'au moins un corps de verrouillage (310) est agencé pour venir en prise avec une rainure de verrouillage (230, 230') au niveau de la première extrémité (210, 210') de la clavette de manille (200) ; et
**caractérisé en ce que**
- le manchon (320, 320'), dans une première position de verrouillage, est agencé pour maintenir l'au moins un corps de verrouillage (310) dans la rainure (230, 230') et, dans une position de libération, est agencé pour libérer l'au moins un corps de verrouillage (310) de la rainure (230, 230').

2. Verrou de manille (300) selon la revendication 1, le verrou de manille étant autobloquant.

3. Verrou de manille (300) selon l'une quelconque des revendications précédentes, dans lequel le verrou de manille (300) comprend un ressort (325, 326) agencé pour maintenir le manchon (320, 320') dans la position de verrouillage.

4. Verrou de manille (300) selon l'une quelconque des revendications précédentes, dans lequel le manchon (320) est maintenu dans la position de verrouillage au moyen d'une force de poussée fournie par un fluide sous pression.

5. Verrou de manille (300) selon l'une quelconque des revendications précédentes, dans lequel l'au moins un corps de verrouillage (310) est une bille.

6. Verrou de manille (300) selon l'une quelconque des revendications précédentes, dans lequel le verrou de manille (300) comprend une partie filetée (330) agencée pour venir en prise avec une partie filetée correspondante (130) dans le corps de manille (100).

7. Manille (1) comprenant un corps de manille (100) avec une première extrémité (110) et une seconde extrémité (120) avec des découpes (125) coïncidant axialement adaptées à l'insertion d'une clavette de manille (200),
dans laquelle :
- un verrou de manille (300) conforme à l'une quelconque des revendications 1 à 6 est agencé sur un extérieur de la première extrémité (110) du corps de manille (100), le verrou de manille (300) étant disposé axialement en coïncidence avec les découpes (125) du corps de manille (100), et le verrou de manille (300) faisant saillie à partir de la première extrémité (110) du corps de manille (100) dans une direction opposée à la seconde extrémité (120) du corps de manille (100) ; et
- la clavette de manille (200) est pourvue d'une rainure de verrouillage radiale (230) au niveau de la première extrémité (210) de la clavette de manille (200), la rainure de verrouillage (230) étant agencée pour venir en prise avec au moins un corps de verrouillage (310) appartenant au verrou de manille (300).

8. Manille (1) selon la revendication 7, dans laquelle la rainure de verrouillage (230') de la clavette de manille (200) présente une largeur conçue pour donner au corps de verrouillage (310) un espace de mouvement dans la direction axiale de la clavette de manille (200).

9. Manille (1) selon l'une quelconque des revendications 7 à 8, dans laquelle la clavette de manille (200) inclut une cavité plane (216) avec une première extrémité (217) agencée pour venir en prise avec une butée correspondante (150) au niveau de la seconde extrémité (120) du corps de manille (100).

10. Manille (1) selon l'une quelconque des revendications 7 à 9, dans laquelle la clavette de manille (200), au niveau d'une seconde extrémité 220, inclut une cavité radiale (218) agencée pour venir en prise avec la butée (150) par rotation de la clavette de manille (200).

11. Dispositif de verrouillage pour une manille (1), dans lequel le dispositif de verrouillage comprend un verrou de manille (300) et une clavette de manille (200) conformément à l'une quelconque des revendications 1 à 6.

12. Dispositif de verrouillage selon la revendication 11, le dispositif de verrouillage comprenant au moins une fonction parmi une première fonction de sécurité et une seconde fonction de sécurité pour la clavette de manille (200), dans lequel :
- la première fonction de sécurité comprend une butée (150) positionnée dans le corps de manille (100) et contre une cavité (216) de la clavette de manille (200), et une première extrémité (217) appartenant à la cavité (216) est agencée pour venir en prise avec la butée (150) de sorte que la clavette de manille (200) soit empêchée d'être retirée du corps de manille (100) ; et
- la seconde fonction de sécurité comprend la butée (150) et la cavité radiale (218) de la clavette de manille (200), la butée (150) étant agencée pour empêcher un mouvement axial de la clavette de manille (200) lorsque la clavette de manille (200) est positionnée de telle sorte que la cavité (216) ne corresponde pas à la butée (150).
